# EUROPEAN PATENT APPLICATION

(11) **EP 1 624 403 A1**
(43) Date of publication of application: **08.02.2006**
(21) Application number: 04018300.6
(22) Date of filing: 02.08.2004
(51) Int. Cl.: G06Q 10/00

(54) **System for querying databases**

(71) Applicant: SAP AG, 69190 Walldorf (DE)
(72) Inventor: Hirth, Gerhard A., Dr., 69234 Dielheim (DE)
(74) Representative: Schneider, Günther Martin

(57) **Abstract**

System and methods, including computer program products for querying at least one database, the system comprising: calculation means for evaluating queries concerning availability based on data in the at least one database; user interface means comprising user input means and display means; wherein the calculation means and the user interface means are coupled to transfer user data from the user interface means to the calculation means and to transfer result data from the calculation means to the user interface means; wherein the result data comprise at least one intermediate and/or final result of a query concerning availability; wherein the user input means is configured to acquire user data about a query concerning availability, requested by a user to be evaluated by the calculation means; wherein the display means is configured to display result data.

## Description

This application relates to the planning and control of material and information flows, and more particularly to systems for querying databases representing material and information flows.

The flow of goods and services from a point of origin to a point of consumption is known as supply chain, and the management of interconnected entities involving one or more supply chains is known as supply chain management (SCM).

A system for supply chain management may be computer-implemented and may often include one or more databases representing the supply chains which are to be managed.

A fundamental activity of a supply chain management system may be concerned with matching demand of goods and services to supply of goods and services. This process is known as demand-supply matching.

Demand-supply matching involves the assessment of the availability of intermediate and/or final goods or services in a supply chain.

In a supply chain management system an assessment of availability, also called an availability check, may be carried out by querying one or more databases which represent the supply chains to be managed.

An availability check is also called Available-to-Promise (ATP). Available-to-Promise (ATP) investigates whether a promised delivery can in fact be made, and if so when.

Two variants of ATP are distinguished:
1. Local ATP permits an ATP check to run on a single database.
2. If more than one database is queried to carry out an availability check, it is called a global availability check or global ATP (GATP).

SCM systems which are capable to perform GATP checks may also include a user interface capable to meet most of the requirements for presenting and explaining the various results of an ATP check.

The results of an ATP check may range from an easy to understand delivery proposal of a requested item (e.g. an item of a production line) to a complex result overview. An ATP check may comprise multiple levels of availability checks forming a so-called multi-level ATP (MATP) check. An ATP check may also comprise rules that have to be executed forming a so-called rule based ATP (RBA) check. An ATP check may also involve stock transport orders (STOs).

It is an object of the present invention to provide a system and a method for querying one or more databases of a supply chain management (SCM) system.

This and other objects of the present invention are achieved by the system of claim 1 and the method of claim 6.

In one embodiment according to the invention a system is provided for querying at least one database, the system comprising: calculation means for evaluating queries concerning availability based on data in the at least one database; user interface means comprising user input means and display means; wherein the calculation means and the user interface means are coupled to transfer user data from the user interface means to the calculation means and to transfer result data from the calculation means to the user interface means; wherein the result data comprise at least one intermediate and/or final result of a query concerning availability; wherein the user input means is configured to acquire user data about a query concerning availability, requested by a user to be evaluated by the calculation means; wherein the display means is configured to display result data.

Preferably, the display means may be configured to identify in the display of result data at least one attribute exerting an effect on the at least one result or a combination of results of a query concerning availability.

Preferably, the effect exerted on the at least one result or a combination of results may be a constraining effect.

Further preferably, the effect exerted on the at least one result or combination of results may be visualized by color.

Yet further preferably, the effect exerted on the at least one result or combination of results may be further visualized numerically.

In a further embodiment of the present invention, a method is provided for querying at least one database using calculation means and display means coupled to each other for data transfer, the method comprising: acquiring user data comprising a query concerning availability, requested by a user; transferring user data to the calculation means; evaluating the query in the calculation means based on data in the at least one database to obtain result data, the result data comprising at least one intermediate and/or final result; transferring the result data to the display means; displaying the result data in the display means wherein the evaluation is performed according to user data determining quality and volume of the result data.

Preferably, the display of the result may further comprise identifying in the display of result data at least one attribute exerting an effect on the at least one result or a combination of results of a query concerning availability.

Preferably, the effect exerted on the at least one result or a combination of results may be a constraining effect.

Further preferably, the effect exerted on the at least one result or combination of results may be visualized by color.

Yet further preferably, the effect exerted on the at least one result or combination of results may be further visualized numerically.

In yet another embodiment of the invention, a computer readable storage medium is provided comprising program code for performing the method according to the invention, when loaded into a computer system.

Furthermore, the invention comprises computer-readable storage media comprising program code for performing the inventive methods, when loaded into a computer system.

It is an advantage of the present invention that the results even of complex availability checks can be readily understood by a user. The execution of ancillary database queries via so-called drill-down functions to help understanding the results of an availability check can be avoided.

The present invention advantageously reduces the computational effort required to carry out an availability check including visualization.

The invention is further described with reference to the drawings, wherein
- Fig. 1: shows a preferred embodiment of the present invention;
- Fig. 2: shows a schematic flow chart comprising tasks carried out by a preferred embodiment of the present invention; and
- Fig. 3: shows, by way of example, a screen shot summarizing the results of an availability check carried out according to a preferred embodiment of the present invention.

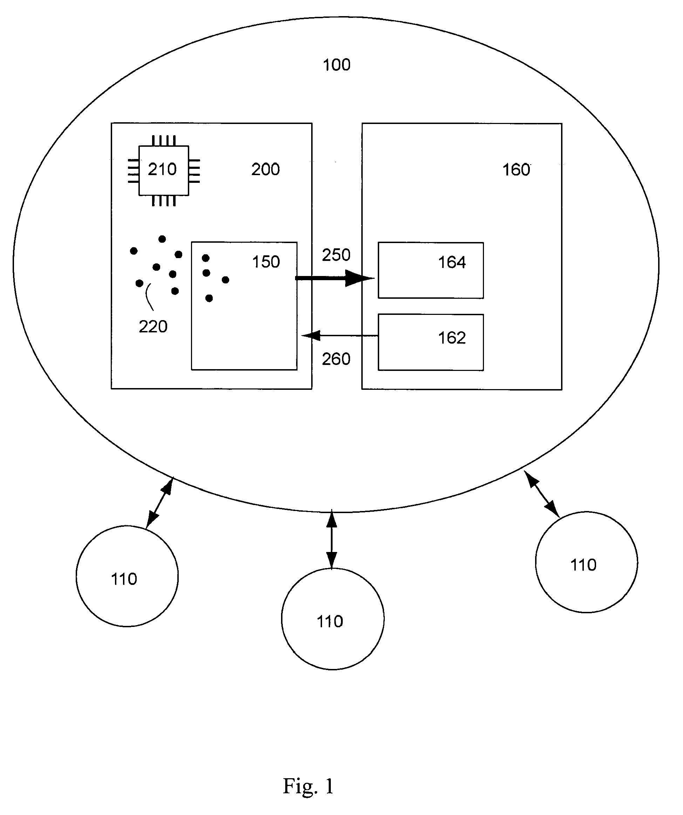

Fig. 1 shows a preferred embodiment of the present invention, used within a supply chain planning tool (e.g. SAP's SAP APO).

The APO can be thought as a planning engine coordinating planning and optimizing activities of a plurality of various enterprise resource planning (ERP) systems or other systems.

For a planning or optimizing task to be carried out a respective application is fed with data from the various enterprise resource planning (ERP) systems or other systems. This data is transformed and saved in the APO data model. If it is simple planning or optimizing data, it can be saved in a database server, for example. If there are particular requirements concerning performance, both performance-critical application logic as well as data objects 220 are transferred to a cache memory 210 (SAP liveCache) instance in an optimization means 200 of the system 100. Data is kept persistent in the SAP liveCache instance. Data persistence in the SAP liveCache instance may ensure that different planning or optimizing processes can use the same data.

The SAP liveCache uses database procedures extensively to save data objects 250 in a persistent state. The processing speed may be increased by connecting pre-compiled application code (e.g. C++) directly to core code resident in the SAP liveCache at run time.

Any database operations and procedures may be executed in the address space of the SAP liveCache in the optimization means 200 without having to switch to the host (e. g. a server) of a calling application. The complete application data may be available in main memory and may only be written back to a hard disk in order to meet requirements of data recovery and persistence. The optimization means 200 may be equipped with an efficient asynchronous input/output (I/O) system, which ensures that the writing of data back to the hard disk does not affect performance.

The system 100 is coupled to one or more databases 110 for storing data which may concern supply chain management.

The optimization means 200 of the system 100 further comprises a calculation means 150. The calculation means 150 is coupled to a user interface means 160. The user interface means 160 comprises a user input means 162 and a display means 164.

The calculation means 150 receives user data 260 from the user interface means 160. User data 260 may comprise information about a query concerning availability, e.g. an ATP or GATP check, as well as information determining the quality or granularity and/or the volume of the expected data resulting from the query or check.

The calculation means is configured to evaluate queries concerning availability based on data in the one or more databases 100.

The display means 164 in the user interface means 160 receives result data 250 from the calculation means 150. The display means 164 may convert the result data 250 into tabular or graphical form or otherwise visualize the result data 250 and display them to a user.

It is to be noted that the system 100 and the database or databases 110 may be situated in remote locations relative to each other, e.g. on different sites or in different countries.

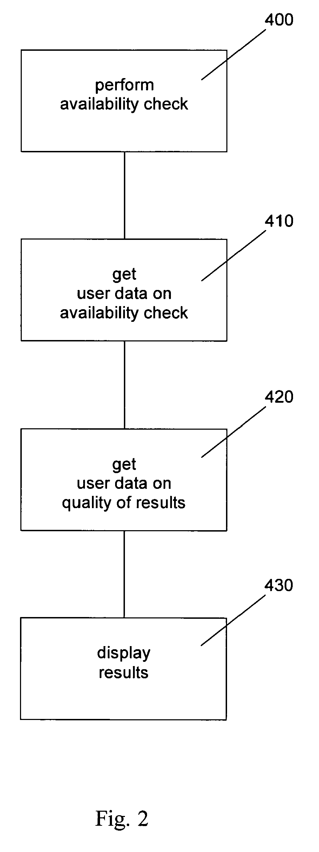

Fig. 2 shows a schematic flow chart comprising tasks performed by a preferred embodiment of the present invention for carrying out a query concerning availability, e.g. an ATP or a GATP check and visualizing the results.

The calculation means 150 performs the corresponding availability check, task 400.

User data 260 comprising information about a query concerning availability are acquired in task 410 from the user via the user interface means 160.

Furthermore, data concerning quality and/or volume of the expected data resulting from the query are acquired in task 420. These data may be setup by the system 100, by the user or they may be predetermined otherwise.

According to the user data 260 the display means 164 retrieves result data 250, generates screens comprising tables, graphs, etc. in task 430 and visually presents them to a user as described for example below.

It is an advantage of the present invention to allow a user to recognize and readily understand the results of complex availability checks, particularly those based on multiple dependencies. Multiple dependencies may be determined in a setup procedure for an availability check. Such a setup procedure may provide a representation or a mapping of a specific production process or business scenario.

It is a further advantage of the present invention that the evaluation of an availability check and the display of the resulting data are carried out independently.

By separating these two activities the evaluation of results may be carried out under the best possible operational conditions, i.e. in a large cache memory. Furthermore the user may be freed from redundant information and may receive a concise and efficient display of relevant information.

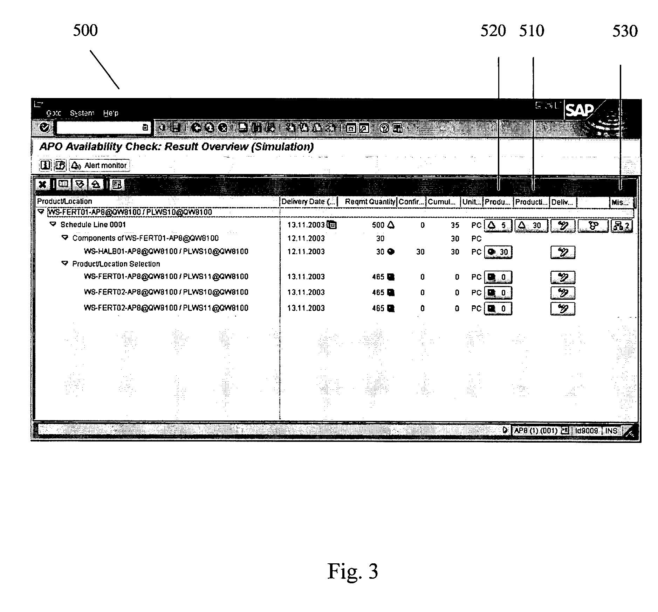

Fig. 3 shows, by way of example, a display or screen 500 of a result overview. The result overview in the display 500 visualizes the results of an availability check according to a preferred embodiment the invention.

A results overview may be a first screen made visible to a user in an ATP check. Such information may include e.g. the reason for displacements (e.g. time shifts) within a substitution via a rule based ATP check (RBA) or it may include a confirmation based on stock on hand within MATP or it may include a limiting basic method after an ATP check based on different basic methods.

For several methods employed in an availability check or a subordinate availability check the limiting method may be the method that exerts the most prominent effect or otherwise may determine a pertinent limitation on the results of the availability check or subordinate availability check.

Various attributes exerting an effect on the results of the availability check can be identified in the display 500:

The contribution of MATP 510 and product availability 520 can be made available at first sight allowing immediate decisions. For further identification colored symbols (e.g. LEDs) may be used.

In addition to the visual identification of product availability 520 a numerical identification expressing the number of missing parts can also be displayed in the corresponding icon for a display of detailed list.

Additionally the constraining nature of basic or enhanced methods employed in an availability check comprising ATP or MATP processes can be visualized 530 by a colored symbol possibly followed by the contributing results quantity. By executing the corresponding function further details can be displayed.

By a user defined setup it can be determined whether all steps of an availability check should be displayed or whether those steps of the check which do not contribute to any result are to be suppressed. Thus the quality and volume of result data of an availability check can be determined.

It can also be further determined to display product or location information by short texts or descriptors, for instance. Depending on the user settings either alphanumeric product and location keys or a product and location description can be displayed.

Additional columns in the result overview (not shown) may provide information about limitations of individual ATP methods in the result overview. The display of the additional columns depends on the business process and therefore on the quality of result data of the corresponding ATP check.

Furthermore in a delivery proposal or a result overview, summarizing an availability check according to a preferred embodiment of the invention, it can be indicated whether a constraint based on a calculation profile (e.g. allowed late confirmation) has altered the original result of an ATP check.

The present techniques can be implemented in digital electronic circuitry, or in computer hardware, firmware, software, or in combinations of them. System of the invention can be implemented in a computer program product tangibly embodied in a machine-readable storage device for execution by a programmable processor. Method steps according to the invention can be performed by a programmable processor executing a program of instructions to perform functions of the invention by operating on the basis of input data, and by generating output data. The invention may be implemented in one or several computer programs that are executable in a programmable system, which includes at least one programmable processor coupled to receive data from, and transmit data to, a storage system, at least one input device, and at least one output device, respectively. Computer programs may be implemented in a high-level or object-oriented programming language, and/or in assembly or machine code. The language or code can be a compiled or interpreted language or code. Processors may include general and special purpose microprocessors. A processor receives instructions and data from memories, in particular from read-only memories and/ or random access memories. A computer may include one or more mass storage devices for storing data; such devices may include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by or incorporated in ASICs (application-specific integrated circuits).

The computer systems or distributed computer networks as mentioned above may be used, for example, for producing goods, delivering parts for assembling products, controlling technical or economical processes, or implementing telecommunication activities.

To provide for interaction with a user, the invention can be implemented on a computer system having a display device such as a monitor or LCD screen for displaying information to the user and a keyboard and a pointing device such as a mouse or a trackball by which the user can provide input to the computer system. The computer system can be programmed to provide a graphical or text user interface through which computer programs interact with users.

A computer may include a processor, memory coupled to the processor, a hard drive controller, a video controller and an input/output controller coupled to the processor by a processor bus. The hard drive controller is coupled to a hard disk drive suitable for storing executable computer programs, including programs embodying the present technique. The I/O controller is coupled by means of an I/O bus to an I/O interface. The I/O interface receives and transmits in analogue or digital form over at least one communication link. Such a communication link may be a serial link, a parallel link, local area network, or wireless link (e.g. an RF communication link). A display is coupled to an interface, which is coupled to an I/O bus. A keyboard and pointing device are also coupled to the I/O bus. Alternatively, separate buses may be used for the keyboard pointing device and I/O interface.

The foregoing descriptions of specific embodiments of the present invention have been presented for the purposes of illustration and description. They are not intended to be exhaustive or to limit the invention to the precise forms disclosed, and obviously many modifications and variations are possible in the light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the claims appended hereto.

## Claims

1. A system for querying at least one database (110), the system comprising:
calculation means (150) for evaluating queries concerning availability based on data in the at least one database (110);
user interface means (160) comprising user input means (162) and display means (164);
wherein the user input means (162) is configured to acquire user data (260) comprising a query concerning availability, requested by a user to be evaluated by the calculation means (150);
wherein the calculation means (150) and the user interface means (160) are coupled to transfer user data (260) from the user interface means (160) to the calculation means (150) and to transfer result data (250) from the calculation means (150) to the user interface means (160);
wherein the calculation means (150) is configured to be operable according to user data (260) determining quality and volume of the result data (250);
wherein the result data (250) comprise at least one intermediate and/or final result of a query concerning availability; and
wherein the display means (164) is configured to display result data (250).

2. The system according to claim 1, wherein the display means is further configured to identify in the display of result data (250) at least one attribute exerting an effect on the at least one result or a combination of results of a query concerning availability.

3. The system according to claim 2, wherein the effect exerted on the at least one result or a combination of results is a constraining effect.

4. The system according to claim 2 or 3, wherein the effect exerted on the at least one result or a combination of results is visualized by color.

5. The system according to claim 4, wherein the effect exerted on the at least one result or a combination of results is further visualized numerically.

6. A method for querying at least one database (110) using calculation means (150) and display means (164) coupled to each other for data transfer, the method comprising:
acquiring user data (260) comprising a query concerning availability, requested by a user;
transferring user data (260) to the calculation means (150);
evaluating the query in the calculation means (150) based on data in the at least one database to obtain result data (250), the result data comprising at least one intermediate and/or final result;
transferring the result data (250) to the display means (164);
displaying the result data (250) in the display means (164), and
wherein evaluating the query is performed according to user data (260) determining quality and volume of the result data (250).

7. The method according to claim 6, wherein displaying the result data (250) further comprises identifying in the display of result data (250) at least one attribute exerting an effect on the at least one result or a combination of results of a query concerning availability.

8. The method according to claim 7, wherein the effect exerted on the at least one result or a combination of results is a constraining effect.

9. The method according to claim 7 or 8, wherein the effect exerted on the at least one result or a combination of results is visualized by color.

10. The method according to claim 9, wherein the effect exerted on the at least one result or a combination of results is further visualized numerically.

11. A computer-readable storage medium comprising program code for performing the method according to claim 6 to 10, when loaded into a computer system.
